# EUROPEAN PATENT SPECIFICATION

(11) **EP 4 331 978 B1**
(45) Date of publication and mention of the grant of the patent: **23.07.2025**
(21) Application number: 22400008.3
(22) Date of filing: 29.08.2022
(51) Int. Cl.: B64C 27/00, G02B 23/12

(54) **A ROTORCRAFT WITH A BLADE TIP ILLUMINATION SYSTEM**
DREHFLÜGELFLUGZEUG MIT EINEM BLATTSPITZENBELEUCHTUNGSSYSTEM
GIRAVION AVEC UN SYSTÈME D'ÉCLAIRAGE DE POINTE DE PALE

(43) Date of publication of application: 06.03.2024
(73) Proprietor: AIRBUS HELICOPTERS DEUTSCHLAND GmbH, 86609 Donauwörth (DE)
(72) Inventor: Heckl, Michael, D-86609 DONAUWÖRTH (DE); Vogl, Julius, D-86368 GERSTHOFEN (DE)
(74) Representative: Pouillot, Laurent Pierre Paul

(56) References cited:
- EP-B1- 3 072 813
- CN-A- 108 802 732
- CN-A- 109 018 394
- DE-A1- 102014 223 727
- WEYNE JOHN E.: "Differences between Gen3 and 4G image intensification technology", 5 May 2021 (2021-05-05), XP093019968, Retrieved from the Internet <URL:https://web.archive.org/web/20210505124344if_/https://www.photonis.com/system/files/2020-10/Difference_Gen3_4G_english_version.pdf> [retrieved on 20230201]
- CHRZANOWSKI K ED - SKARBEK WLAD: "Review of night vision technology", OPTO-ELECTRONICS REVIEW, WARSZAWA, PL, vol. 21, no. 2, 15 March 2013 (2013-03-15), pages 153 - 181, XP035349513, ISSN: 1230-3402, [retrieved on 20130315], DOI: 10.2478/S11772-013-0089-3
- ANONYMOUS: "Whats the limit on white light for saving night vision?", CANDLE POWER FORUMS, 1 September 2006 (2006-09-01), XP093020119, Retrieved from the Internet <URL:https://www.candlepowerforums.com/threads/whats-the-limit-on-white-light-for-saving-night-vision.131366/> [retrieved on 20230202]

## Description

The invention is related to a rotorcraft with a blade tip illumination system.

In various flight missions of rotorcrafts precise and reliable information with respect to distances between the rotorcrafts and respective obstacles is required. For instance, if a rotorcraft such as a helicopter is hovering close to a wind turbine generator, e. g. for hoisting above the nacelle resp. maintenance platform of the wind turbine generator, the pilot of the helicopter must take extreme care that the helicopter is not drifting towards the wind turbine generator structure and/or its wind turbine blades. This also generally applies to any confined area, e. g. close to mountain ridges, trees, etc.

Furthermore, particular flight conditions may also be challenging for pilots. For instance, comparatively slow helicopter side drift due to repetitive side wind gusts may easily go unnoticed by the pilot and result in a stepwise drifting of the helicopter towards the wind turbine generator structure and/or its wind turbine blades. Moreover, in flight conditions with comparatively low visibility, e. g. due to night time, visibility to certain position reference points at the wind turbine generator may also be rather limited.

In the flight missions and flight conditions described above, the pilot may be placed in a position to prevent a potentially disastrous rotor strike of the helicopter's rotor blades against the wind turbine generator structure and/or its wind turbine blades by providing the pilot with precise and reliable information with respect to distances between the helicopter and the wind turbine generator structure and/or its wind turbine blades.

The document CN 109 018 394 A describes a helicopter wingtip illumination method, which is realized by installing a transmitter on the fuselage of a helicopter, emitting visible or invisible band electromagnetic waves through the transmitter to the lower position of the trajectory of the wingtip of a rotating main rotor, and observing the trajectory of the wingtip of the main rotor through the visible light or visible fluorescence generated by the reflection of the wingtip after encountering the visible or invisible band electromagnetic waves.

The document EP 3 072 813 B1 describes a helicopter comprising a helicopter light system with layer material and light sources. The layer material comprises at least one of a fluorescent material and a phosphorescent material. The light sources comprise any appropriate lighting device, such as a light bulb, LED, or OLED in any appropriate number, which is capable of generating light in appropriate color and of sufficient lighting power to be directed onto the layer material for sufficient light emission and/or reflection by the layer material. More specifically, the helicopter comprises a helicopter body, which includes a main frame and a tail boom. Furthermore, the helicopter comprises multiple rotor blades, each rotor blade having rotor blade tips at both of its ends, wherein layer material of the helicopter light system is arranged at only one rotor tip or at both rotor tips of a given rotor blade. Particularly, the layer material is arranged on a side of the rotor blade tip of the given rotor blade that faces the helicopter body, which side is a bottom side of the given rotor blade. When light from a given light source of the helicopter light system is directed onto the layer material on the given rotor blade, visible light is emitted and/or reflected by the layer material during rotation of the given rotor blade of the helicopter.

However, as the layer material emits and/or reflects visible light, the rotor blades are clearly visible in a night time mission of the helicopter not only to the pilot, but also to other people which are not necessarily onboard the helicopter. These other people would, thus, be able to distinguish and trace the helicopter in its night time mission, which may for instance represent a potential danger in military helicopter operation. Furthermore, if e. g. in such military helicopter operation during a night time mission the pilot or other crew members wear night vision devices, they may be blinded by the visible light.

The document CN 108 802 732 A describes a helicopter wingtip display device comprising a transmitter device for transmitting invisible band electromagnetic waves to the wingtip trajectory of the main rotor, a reflector capable of reflecting invisible band electromagnetic waves at the wingtip of the main rotor, and a display device such as a night-vision device capable of receiving and displaying the invisible band electromagnetic waves reflected by the reflector and thereby displaying the position of the helicopter wingtip.

It is, therefore, an object of the present invention to provide a new rotorcraft with a blade tip illumination system that is suitable to overcome the above-described drawbacks and problems of the state-of-the-art.

This object is solved by a rotorcraft comprising the features of claim 1. More specifically, according to the present invention a rotorcraft is provided that comprises at least one main rotor, at least one light returning unit, a blade tip illumination device, and a command unit. The at least one main rotor comprises a rotor head and a plurality of rotor blades extending from the rotor head toward associated rotor blade tips. The associated rotor blade tips form a virtual blade tip circle upon rotation around the rotor head. The at least one light returning unit is provided on at least one of the associated rotor blade tips. The blade tip illumination device comprises at least one light source configured to emit a light beam toward at least a portion of the virtual blade tip circle for illuminating the at least one light returning unit. The command unit is configured to command the at least one light source to emit one of a white light beam with a luminous intensity of more than 1000 cd, in a night-vision free mode, or an infrared light beam with a radiant intensity of approximately 0.1 W/sr, in a night-vision mode. The at least one light returning unit is adapted to return light only in response to being illuminated with the emitted light beam, wherein the returned light forms during rotation of the associated rotor blade tips around the rotor head on the virtual blade tip circle a luminous ring segment. The returned light has a wavelength that is detectable without a night-vision device in the night-vision free mode and that is detectable by a night-vision device in the night-vision mode.

Advantageously, the inventive blade tip illumination system with the blade tip illumination device and the at least one light returning unit enables particularly in night time missions a clear indication of the rotor blade tips to a pilot of the rotorcraft, thereby increasing safety of flight and maneuver potential of the rotorcraft. The blade tip illumination system has a simple low-cost configuration and avoids a requirement for expensive additional components.

More specifically, such a low-cost configuration may be obtained by painting conventional standard rotor blades on their rotor blade tips with reflective paintings or coatings (e. g. glossy effect). Alternatively, low-cost stickers may be attached to the rotor blade tips. However, application of the reflective paintings or coatings, or stickers, is not limited to the rotor blade tips, but could also be made on the entire rotor blades or one or more selected sections thereof.

Furthermore, on the rotorcraft's airframe or fuselage one or more light sources (e. g. white and/or infrared) are installed and their respective light beams are directed towards the rotor blades and, more particularly, to the rotor blade tips. At least in night time missions the reflection of the light beams is preferably detectable at least with night-vision devices and may, thus, be made visible to rotorcraft personnel or crew.

Preferably, the reflective paintings or coatings, or stickers, reflect the light beams only in sections of a respective virtual rotor disk, i. e. in sections of the virtual blade tip circle, formed by rotation of the rotor blades where the light beam illuminates, i. e. hits the reflective paintings or coatings, or stickers, which may then be made visible in night time missions with night-vision devices. However, in areas of the virtual rotor disk where no light is applied to the reflective paintings or coatings, or stickers, they are preferably not visible in night time missions.

In other words, in order to ensure visibility of the rotor blade tips the light beam must be designed in a way to cover a respectively desired section of the rotor blades in any flight state as only illuminated areas are visible. Furthermore, a respectively applied light source power needs to be adjusted in order not to blind rotorcraft personnel or crew wearing night-vision devices. However, dependent on mission focus, visible (e. g. white light) or non-visible light (e. g. infrared light) may preferably be used.

Preferably, a light source such as e. g. LED, Halogen, Laser, Xenon, etc. is used which emits some light in infrared spectrum for reflection by the reflective paintings or coatings, or stickers, such that respectively reflected light may be detected by the night-vision device (any type of night-vision device and no matter which class, as they are detecting different wavelengths better or worse; class a, b, or c). However, it is not mandatory to emit only the infrared spectrum. Instead, the light source may also emit some light in the whole spectrum from ultraviolet to infrared.

A suitable lighting power for infrared light of the light source (measured in W/sr) is approximately 0,1 W/sr. For white light (measured in cd) approximately 1000 cd appear to be acceptable. In other words, a suitable level of lighting power of the light source is required so that the light beam will be reflected by the reflective paintings or coatings, or stickers, but neither too much so that the pilot is blinded, nor too few such that the pilot may not recognize anything. Furthermore, regarding the glossiness of the reflective paintings or coatings, or stickers (measured in Gloss units), preferably at least 90 Gloss units are implemented.

The position of the light sources is preferably on the left and right side of the rotorcraft, in the case of a helicopter preferably on the upper deck behind the cockpit, but it is not only limited to this position. In fact, the position must only be suitable to emit the light beam towards the rotor blade tips and to get some reflected light back from the reflective paintings or coatings, or stickers to be visualized with the night-vision device.

An illustrative reflective painting on a given rotor blade tip preferably comprises a base coat that enables application of a paint, a phosphorescent paint applied on the base coat to make the rotor blade tip visible without night-vision device, and a glossy clear coat to make the rotor blade tip visible with the night-vision device. In other words, only the glossy clear coat is required for use with the night-vision device.

According to some aspects, the wavelength that is detectable by the night-vision device is comprised in a wavelength spectrum ranging from 450 nm to 930 nm, preferably from 650 nm to 850 nm.

The at least one light source may be one of a LED, Halogen, Laser or Xenon light.

Preferably, the at least one light returning unit comprises a light returning sticker attached on the at least one of the associated rotor blade tips, and/or a light returning coating applied to the at least one of the associated rotor blade tips.

The light returning coating may comprise at least a base coating, a phosphorescent layer, and a glossy clear coating.

The glossy clear coating may comprise a glossiness of more than 90 Gloss units.

Preferably, the phosphorescent layer is adapted to return light in response to being illuminated with the white light beam, and the glossy clear coating is adapted to return light in response to being illuminated with the infrared light beam.

According to some aspects, the rotorcraft further comprises a fuselage that forms a starboard side wall and a portside wall, and the at least one light source comprises a first light source provided on the portside wall and a second light source provided on the starboard side wall.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a lateral view of an illustrative rotorcraft,
- Figure 2 shows a top view of the rotorcraft of Figure 1 with a blade tip illumination system compatible with the presently claimed invention,
- Figure 3 shows a front view of the rotorcraft of Figure 2 with the blade tip illumination system according to a variant compatible with the presently claimed invention,
- Figure 4 shows a top view of the rotorcraft of Figure 3 with the blade tip illumination system in operation, and
- Figure 5 shows a schematic view of a rotor blade tip with a light returning unit according to an aspect compatible with the presently claimed invention.

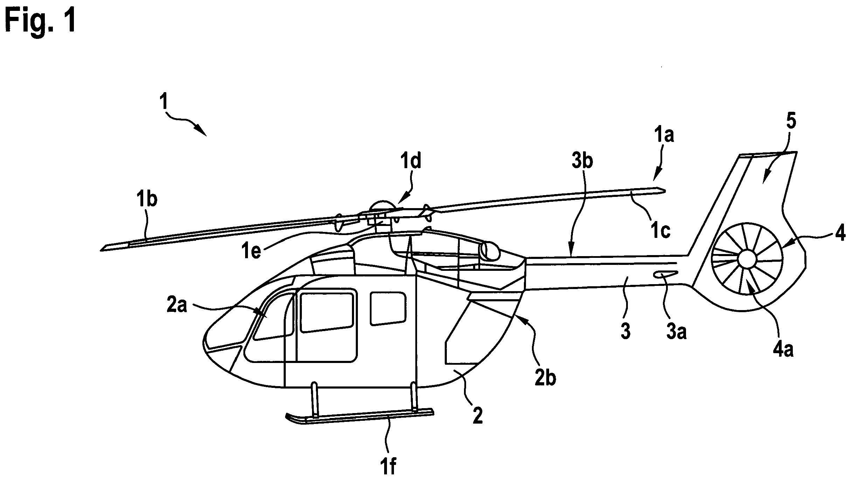

Figure 1 shows a rotorcraft 1 that is exemplarily illustrated as a helicopter. Thus, for purposes of simplicity and clarity, the rotorcraft 1 is hereinafter referred to as the "helicopter 1". The present invention is, however, not limited to helicopters and may likewise be applied to any other rotorcraft.

According to the presently claimed invention, the helicopter 1 comprises at least one main rotor 1a, preferably a multi-blade main rotor, for providing lift and forward or backward thrust during operation. By way of example, the at least one main rotor 1a comprises a plurality of rotor blades which are connected at an associated rotor head 1d to a rotor shaft 1e, which rotates in operation of the helicopter 1 about an associated rotor axis. Two rotor blades of the plurality of rotor blades are visible in Figure 1 and separately labelled with the reference signs 1b, 1c.

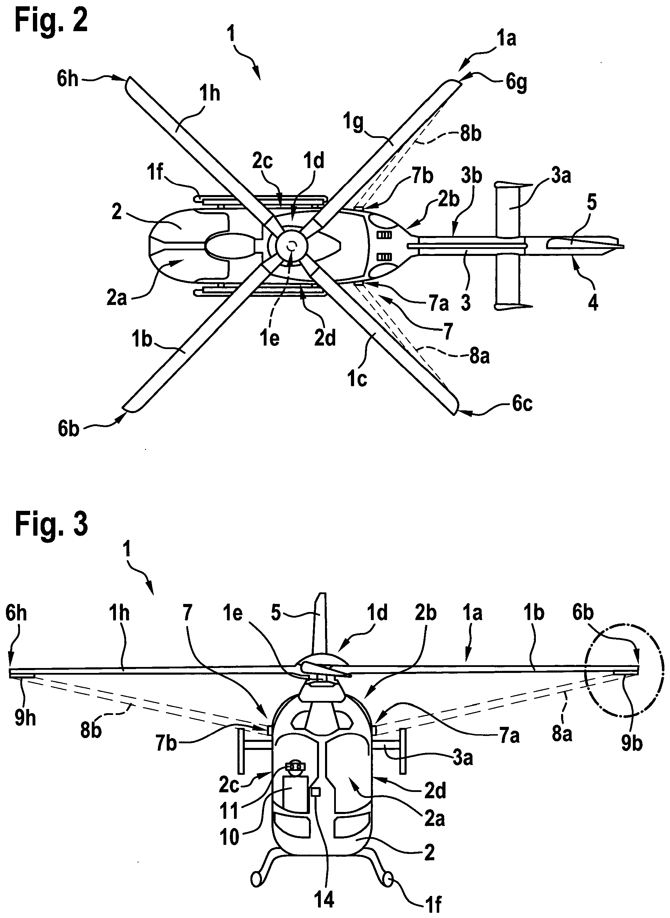

Furthermore, the helicopter 1 comprises a fuselage 2 that preferably forms an aircraft interior region 2a. Illustratively, a lefthand side of the fuselage 2 is shown and, thus, a portside wall (2d in Figure 2) of the fuselage 2 of the helicopter 1, to which a landing gear 1f of the skid-type is attached, by way of example. The aircraft interior region 2a may accommodate a cockpit and may further accommodate a cabin for passengers and/or cargo.

By way of example, a tail boom 3 with a horizontal stabilizer 3a is connected at a rear fuselage 2b to the fuselage 2 of the helicopter 1. The tail boom 3 is illustratively implemented as a slim beam element that comprises at least a tubular tail boom cone 3b.

The helicopter 1 illustratively further comprises at least one preferentially shrouded counter-torque device 4 configured to provide counter-torque during operation, i. e. to counter the torque created by rotation of the at least one main rotor 1a for purposes of balancing the helicopter 1 in terms of yaw. The at least one counter-torque device 4 is illustratively provided at an aft section of the tail boom 3 and preferably comprises a tail rotor 4a. The aft section of the tail boom 3 preferably further comprises a fin 5.

Figure 2 shows the helicopter 1 of Figure 1 seen from above. The helicopter 1 comprises the fuselage 2 that illustratively forms a starboard side wall 2c and a portside wall 2d, and that is connected at the rear fuselage 2b to the tail boom 3 which comprises the horizontal stabilizer 3a, the counter-torque device 4 and the fin 5. The helicopter 1 further comprises the at least one main rotor 1a with the plurality of rotor blades which are connected at the rotor head 1d to the rotor shaft 1e.

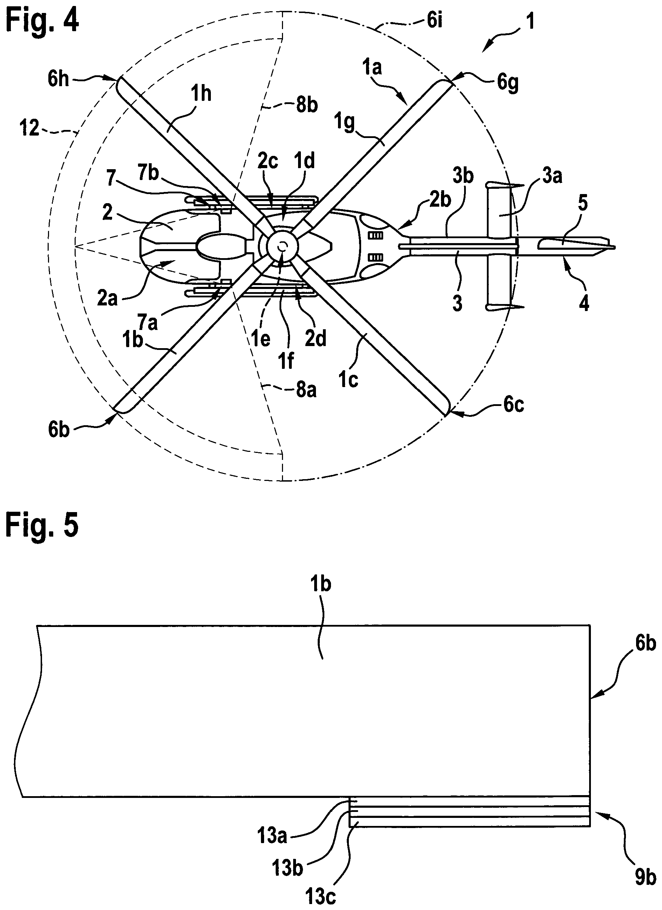

The plurality of rotor blades comprises the rotor blades 1b, 1c of Figure 1, as well as two additional rotor blades 1g, 1h. The plurality of rotor blades 1b, 1c, 1g, 1h extend from the rotor head 1d toward associated rotor blade tips 6b, 6c, 6g, 6h. The rotor blade tips 6b, 6c, 6g, 6h form a virtual blade tip circle (6i in Figure 4) upon rotation around the rotor head 1d.

In order to enable especially in night time missions of the helicopter 1 a clear indication of the rotor blade tips 6b, 6c, 6g, 6h to a pilot (10 in Figure 3) of the helicopter 1, a blade tip illumination system with a blade tip illumination device 7 and at least one light returning unit (9b, 9h in Figure 3) is provided. The at least one light returning unit is provided on at least one of the rotor blade tips 6b, 6c, 6g, 6h, as described in more detail below at Figure 3 and Figure 4.

The blade tip illumination device 7 comprises at least one light source configured to emit a light beam toward at least a portion of the virtual blade tip circle (6i in Figure 4) for illuminating the at least one light returning unit. The at least one light source may be one of a LED, Halogen, Laser or Xenon light. Illustratively, the blade tip illumination device 7 comprises two light sources 7a, 7b, each one being configured to emit an associated light beam 8a, 8b toward at least a portion of the virtual blade tip circle for illuminating the at least one light returning unit (9b, 9h in Figure 3).

Each light returning unit (9b, 9h in Figure 3) is adapted to return light in response to being illuminated with one of the emitted light beams 8a, 8b, as described in more detail below at Figure 3. Each light returning unit may comprise a light returning sticker attached on an associated one of the rotor blade tips 6b, 6c, 6g, 6h, and/or a light returning coating (13a, 13b, 13c in Figure 5) applied to the associated one of the rotor blade tips 6b, 6c, 6g, 6h.

By way of example, the two light sources 7a, 7b are arranged close to the rear fuselage 2 of the helicopter 1. In this configuration, the two light sources 7a, 7b and the light returning units provided on the rotor blade tips 6b, 6c, 6g, 6h are preferably configured such that returned light from the light returning units forms during rotation of the rotor blade tips 6b, 6c, 6g, 6h around the rotor head 1d on the virtual blade tip circle (6i in Figure 4) a luminous ring.

The returned light has a wavelength suitable for detection without a night-vision device in a night-vision free mode. In said night-vision free mode, the emitted light beams 8a, 8b are preferably white light beams with a luminous intensity of more than 1000 cd and, preferentially, a maximum of 2000 cd.

Figure 3 shows the helicopter 1 of Figure 2 seen from the front. The helicopter 1 comprises the fuselage 2 that forms the aircraft interior region 2a, the starboard side wall 2c, and the portside wall 2d. The helicopter 1 further comprises the at least one main rotor 1a with the plurality of rotor blades 1b, 1h which are connected at the rotor head 1d to the rotor shaft 1e and which extend from the rotor head 1d toward the rotor blade tips 6b, 6h. The rotor blade tips 6b, 6h form a virtual blade tip circle (6i in Figure 4) upon rotation around the rotor head 1d. Moreover, the helicopter 1 comprises the blade tip illumination system with the blade tip illumination device 7 having the two light sources 7a, 7b, which emit the light beams 8a, 8b, as well as the at least one light returning unit.

Preferably, each one of the rotor blade tips is provided with an associated light returning unit. Illustratively, the rotor blade tip 6b is provided with a light returning unit 9b, and the rotor blade tip 6h is provided with a light returning unit 9h. The light returning units 9b, 9h are arranged on an underside of the rotor blade tips 6b, 6h such that they are visible from the aircraft interior region 2a, e. g. at least from a pilot 10 in the cockpit of the helicopter 1. By way of example, the pilot 10 is wearing a night-vision device 11.

The light returning units 9b, 9h are illuminated with the light beams 8a, 8b emitted from the light sources 7a, 7b which are now illustratively arranged in a front portion of the helicopter 1 close to the cockpit. Illustratively, the light returning unit 9b is illuminated with the light beam 8a, and the light returning unit 9h is illuminated with the light beam 8b.

Each one of the light returning units 9b, 9h is adapted to return light in response to being illuminated with one of the emitted light beams 8a, 8b. In the illustrated example, the light returning unit 9b returns light in response to being illuminated with the emitted light beam 8a, and the light returning unit 9h returns light in response to being illuminated with the emitted light beam 8b.

According to the presently claimed invention, the emitted light beams 8a, 8b are infrared light beams with a radiant intensity of approximately 0.1 W/sr in the night-vision mode, and the emitted light beams 8a, 8b are white light beams with a luminous intensity of more than 1000 cd in the night-vision free mode.

The returned light forms during rotation of the rotor blade tips 6b, 6h around the rotor head 1d on the virtual blade tip circle (6i in Figure 4) at least a luminous ring segment (12 in Figure 4) visible via the night-vision device 11. Therefore, the returned light from the light returning units 9b, 9h has a wavelength suitable for detection by the night-vision device 11. The wavelength suitable for detection by the night-vision device 11 is preferably comprised in a wavelength spectrum ranging from 450 nm to 930 nm, preferably from 650 nm to 850 nm.

Figure 4 shows the helicopter 1 of Figure 3 seen from above, similar to the representation in Figure 2. The helicopter 1 comprises the fuselage 2 that forms the aircraft interior region 2a, the starboard side wall 2c, and the portside wall 2d. The helicopter 1 further comprises the at least one main rotor 1a with the plurality of rotor blades 1b, 1c, 1g, 1h which are connected at the rotor head 1d to the rotor shaft 1e and which extend from the rotor head 1d toward the rotor blade tips 6b, 6c, 6g, 6h. Moreover, the helicopter 1 comprises the blade tip illumination system with the blade tip illumination device 7 having the two light sources 7a, 7b, which emit the light beams 8a, 8b, as well as the light returning units provided on the rotor blade tips 6b, 6c, 6g, 6h.

In operation of the helicopter 1, the rotor blades 1b, 1c, 1g, 1h and, thus, the rotor blade tips 6b, 6c, 6g, 6h rotate around the rotor head 1d. Thereby, the rotor blade tips 6b, 6c, 6g, 6h form a virtual blade tip circle 6i. The blade tip circle 6i is referred to as being "virtual", as actually no circle is formed. In fact, the rotor blade tips 6b, 6c, 6g, 6h are merely travelling along a circular path around the rotor head 1d.

During rotation of the rotor blades 1b, 1c, 1g, 1h around the rotor head 1d, the light returning units provided on the rotor blade tips 6b, 6c, 6g, 6h are illuminated with the light beams 8a, 8b emitted from the light sources 7a, 7b which are arranged in the front portion of the helicopter 1 close to the cockpit. Each one of the light beams 8a, 8b is preferably formed to illuminate a predetermined segment of the virtual blade tip circle 6i. Thus, the light returning units provided on the rotor blade tips 6b, 6c, 6g, 6h are illuminated with the light beams 8a, 8b emitted from the light sources 7a, 7b only in the predetermined segments of the virtual blade tip circle 6i.

Each one of the light returning units returns light in response to being illuminated with one of the emitted light beams 8a, 8b. Each one of the light returning units returns only light as long as it is illuminated with one of the emitted light beams 8a, 8b. Accordingly, the returned light forms on the virtual blade tip circle 6i only a luminous ring segment 12, illustratively in front of the cockpit.

Figure 5 shows the rotor blade tip 6b of the rotor blade 1b of Figure 2 to Figure 4, which is provided with the light returning unit 9b as described above at Figure 3. The light returning unit 9b may comprise a light returning sticker attached on the rotor blade tip 6b, and/or a light returning coating applied to the rotor blade tip 6b.

By way of example, the light returning unit 9b is formed as a light returning coating. Preferably, the light returning coating comprises at least a base coating 13a and a glossy clear coating 13c. The glossy clear coating 13c is at least adapted to return light in response to being illuminated with an infrared light beam and may be formed with a glossiness of more than 90 Gloss units.

The light returning coating may further comprise a phosphorescent layer 13b. The phosphorescent layer 13b may be adapted to return light at least in response to being illuminated with a white light beam. In Figure 3 the light sources 7a, 7b are arranged in a front portion of the helicopter 1 and the returned light from the light returning units 9a, 9b has a wavelength suitable for detection by the night-vision device 11, e. g. in an associated night-vision mode, whereas in Figure 2 the light sources 7a, 7b are arranged close to the rear fuselage 2b of the helicopter 1 and the returned light from the light returning units 9a, 9b has a wavelength suitable for detection without a night-vision device, e. g. in an associated night-vision free mode. However, the helicopter 1 according to the presently claimed invention is configured to enable both the night-vision mode and the night-vision free mode.

More specifically, the helicopter 1 is provided with a command unit configured to command the light sources 7a, 7b to emit either white light beams with a luminous intensity of more than 1000 cd in the night-vision free mode, or infrared light beams with radiant intensities of approximately 0.1 W/sr in the night-vision mode. A respective command unit is exemplified in Figure 3 and labelled therein with the reference sign 14.

In such a configuration, each light source may be configured to emit either a white light beam, or an infrared light beam. Alternatively, e. g. four light sources may be provided, for instance two light sources according to the configuration of Figure 2, which may be configured to emit only white light beams, and two light sources according to the configuration of Figure 3, which may be configured to emit only infrared light beams.

Furthermore, Figure 2 to Figure 5 make only reference to light returning units provided on rotor blade tips. However, one or more rotor blades may also be provided with more than one light returning unit. For instance, a given rotor blade may be provided with a plurality of light returning units which are spaced apart from each other on the given rotor blade, and so on.

### Reference List

1 rotorcraft
1a multi-blade main rotor
1b, 1c, 1g, 1h rotor blades
1d rotor head
1e rotor shaft
1f landing gear
2 fuselage
2a cockpit
2b rear fuselage
2c starboard side wall
2d portside wall
3 tail boom
3a horizontal stabilizer
3b tail boom cone
4 counter-torque device
4a tail rotor
5 fin
6b, 6c, 6g, 6h rotor blade tips
6i virtual blade tip circle
7 blade tip illumination device
7a, 7b light sources
8a, 8b light beams
9b, 9h light returning units
10 rotorcraft pilot
11 night-vision device
12 luminous ring
13a base coating
13b phosphorescent layer
13c clear coating
14 command unit

## Claims

1. A rotorcraft (1) comprising:
at least one main rotor (1a) with a rotor head (1d) and a plurality of rotor blades (1b, 1c, 1g, 1h) extending from the rotor head (1d) toward associated rotor blade tips (6b, 6c, 6g, 6h), wherein the associated rotor blade tips (6b, 6c, 6g, 6h) form a virtual blade tip circle (6i) upon rotation around the rotor head (1d);
at least one light returning unit (9b, 9h) provided on at least one of the associated rotor blade tips (6b, 6c, 6g, 6h);
a blade tip illumination device (7) comprising at least one light source (7a, 7b) configured to emit a light beam (8a, 8b) toward at least a portion of the virtual blade tip circle (6i) for illuminating the at least one light returning unit (9b, 9h); and
a command unit (14) configured to command the at least one light source (7a, 7b) to emit one of a white light beam with a luminous intensity of more than 1000 cd, in a night-vision free mode, or an infrared light beam with a radiant intensity of approximately 0.1 W/sr, in a night-vision mode;
wherein the at least one light returning unit (9b, 9h) is adapted to return light only in response to being illuminated with the emitted light beam (8a, 8b); wherein the returned light forms during rotation of the associated rotor blade tips (6b, 6c, 6g, 6h) around the rotor head (1d) on the virtual blade tip circle (6i) a luminous ring segment (12);
wherein the returned light has a wavelength that is detectable without a night-vision device (11) in the night-vision free mode, and wherein the returned light has a wavelength that is detectable by a night-vision device (11) in the night-vision mode.

2. The rotorcraft (1) of claim 1,
wherein the wavelength that is detectable by the night-vision device (11) is comprised in a wavelength spectrum ranging from 450 nm to 930 nm, preferably from 650 nm to 850 nm.

3. The rotorcraft (1) of claim 1 or 2,
wherein the at least one light source (7a, 7b) is one of a LED, Halogen, Laser or Xenon light.

4. The rotorcraft (1) of any one of the preceding claims,
wherein the at least one light returning unit (9b, 9h) comprises a light returning sticker attached on the at least one of the associated rotor blade tips (6b, 6c, 6g, 6h), and/or a light returning coating (13a, 13b, 13c) applied to the at least one of the associated rotor blade tips (6b, 6c, 6g, 6h).

5. The rotorcraft (1) of claim 4,
wherein the light returning coating (13a, 13b, 13c) comprises at least a base coating (13a), a phosphorescent layer (13b), and a glossy clear coating (13c).

6. The rotorcraft (1) of claim 5,
wherein the glossy clear coating (13c) comprises a glossiness of more than 90 Gloss units.

7. The rotorcraft (1) of claim 5 or 6,
wherein the phosphorescent layer (13b) is adapted to return light in response to being illuminated with the white light beam, and wherein the glossy clear coating (13c) is adapted to return light in response to being illuminated with the infrared light beam.

8. The rotorcraft (1) of any one of the preceding claims,
further comprising a fuselage (2) that forms a starboard side wall (2c) and a portside wall (2d), and wherein the at least one light source (7a, 7b) comprises a first light source (7a) provided on the portside wall (2d) and a second light source (7b) provided on the starboard side wall (2c).

## Patentansprüche

1. Drehflügler (1), der umfasst:
mindestens einen Hauptrotor (1a) mit einem Rotorkopf (1d) und einer Mehrzahl von Rotorblättern (1b, 1c, 1g, 1h), die sich von dem Rotorkopf (1d) zu zugeordneten Rotorblattspitzen (6b, 6c, 6g, 6h) erstrecken, wobei die zugeordneten Rotorblattspitzen (6b, 6c, 6g, 6h) bei Drehung um den Rotorkopf (1d) einen virtuellen Blattspitzenkreis (6i) beschreiben;
mindestens eine Licht zurückwerfende Einheit (9b, 9h), die an mindestens einer der zugeordneten Rotorblattspitzen (6b, 6c, 6g, 6h) vorgesehen ist;
eine Blattspitzenbeleuchtungsvorrichtung (7), die mindestens eine Lichtquelle (7a, 7b) umfasst, die konfiguriert ist, um einen Lichtstrahl (8a, 8b) in Richtung wenigstens eines Abschnitts des virtuellen Blattspitzenkreises (6i) zu emittieren, um die wenigstens eine Licht zurückwerfende Einheit (9b, 9h) zu beleuchten; und
eine Steuereinheit (14), die konfiguriert ist, um die wenigstens eine Lichtquelle (7a, 7b) so zu steuern, dass sie entweder in einem Nachtsicht-freien Modus einen weißen Lichtstrahl mit einer Lichtstärke von mehr als 1000 cd oder in einem Nachtsichtmodus einen Infrarotlichtstrahl mit einer Strahlungsintensität von etwa 0,1 W / sr emittiert;
wobei die mindestens eine Licht zurückwerfende Einheit (9b, 9h) eingerichtet ist, Licht nur in Reaktion auf die Beleuchtung mit dem emittierten Lichtstrahl (8a, 8b) zurückzuwerfen; wobei das zurückgeworfene Licht während der Drehung der zugeordneten Rotorblattspitzen (6b, 6c, 6g, 6h) um den Rotorkopf (1d) auf dem virtuellen Blattspitzenkreis (6i) ein leuchtendes Ringsegment (12) bildet;
wobei das zurückgeworfene Licht im Nachtsicht-freien Modus eine Wellenlänge aufweist, die ohne Nachtsichtgerät (11) detektierbar ist, und wobei das zurückgeworfene Licht im Nachtsichtmodus eine Wellenlänge aufweist, die durch ein Nachtsichtgerät (11) detektierbar ist.

2. Drehflügler (1) nach Anspruch 1, bei dem die von der Nachtsichtvorrichtung (11) detektierbare Wellenlänge in einem Wellenlängenspektrum von 450 nm bis 930 nm, vorzugsweise von 650 nm bis 850 nm, enthalten ist.

3. Drehflügler (1) nach Anspruch 1 oder 2, bei dem die mindestens eine Lichtquelle (7a, 7b) eine LED-, Halogen-, Laser- oder Xenon-Leuchte ist.

4. Drehflügler (1) nach einem der vorhergehenden Ansprüche, bei dem die mindestens eine Licht zurückwerfende Einheit (9b, 9h) einen Licht zurückwerfenden Aufkleber umfasst, der an der mindestens einen der zugeordneten Rotorblattspitzen (6b, 6c, 6g, 6h) angebracht ist, und/oder eine Licht zurückwerfende Beschichtung (13a, 13b, 13c) umfasst, die auf die mindestens eine der zugeordneten Rotorblattspitzen (6b, 6c, 6g, 6h) aufgebracht ist.

5. Drehflügler (1) nach Anspruch 4, bei dem die Licht zurückwerfende Beschichtung (13a, 13b, 13c) mindestens eine Grundbeschichtung (13a), eine phosphoreszierende Schicht (13b) und eine glänzende Klarbeschichtung (13c) umfasst.

6. Drehflügler (1) nach Anspruch 5, bei dem die glänzende Klarbeschichtung (13c) einen Glanzgrad von mehr als 90 Glanzeinheiten aufweist.

7. Drehflügler (1) nach Anspruch 5 oder 6, bei dem die phosphoreszierende Schicht (13b) eingerichtet ist, um Licht zurückzuwerfen, wenn sie mit dem weißen Lichtstrahl beleuchtet wird, und wobei die glänzende Klarbeschichtung (13c) eingerichtet ist, um Licht zurückzuwerfen, wenn sie mit dem Infrarotlichtstrahl beleuchtet wird.

8. Drehflügler (1) nach einem der vorhergehenden Ansprüche, ferner umfassend einen Rumpf (2), der eine Steuerbordwand (2c) und eine Backbordwand (2d) bildet, wobei die mindestens eine Lichtquelle (7a, 7b) eine an der Backbordwand (2d) vorgesehene erste Lichtquelle (7a) und eine an der Steuerbordwand (2c) vorgesehene zweite Lichtquelle (7b) umfasst.

## Revendications

1. Giravion (1) comprenant :
au moins un rotor (1a) principal avec une tête (1d) de rotor et une pluralité de pales (1b, 1c, 1g, 1h) de rotor s'étendant de la tête (1d) de rotor vers les extrémités (6b, 6c, 6g, 6h) de pales de rotor associées, dans lequel les extrémités (6b, 6c, 6g, 6h) de pales de rotor associées forment un cercle (6i) d'extrémité de pale virtuel lors de la rotation autour de la tête (1d) de rotor ;
au moins une unité (9b, 9h) réfléchissant la lumière prévue sur au moins l'une parmi les extrémités (6b, 6c, 6g, 6h) de pales de rotor associées ;
un dispositif (7) d'illumination d'extrémité de pale comprenant au moins une source (7a, 7b) de lumière configurée pour émettre un faisceau (8a, 8b) lumineux vers au moins une partie du cercle (6i) d'extrémité de pales virtuel afin d'illuminer ladite au moins une unité (9b, 9h) réfléchissant la lumière ; et
une unité (14) de commande configurée pour commander ladite au moins une source (7a, 7b) de lumière afin d'émettre l'un parmi un faisceau de lumière blanche avec une intensité lumineuse supérieure à 1000 cd, dans un mode sans vision nocturne, ou un faisceau de lumière infrarouge avec une intensité énergétique d'environ 0,1 W/sr, dans un mode de vision nocturne ;
dans lequel ladite au moins une unité (9b, 9h) réfléchissant la lumière est apte à réfléchir la lumière uniquement en réponse à une illumination par le faisceau (8a, 8b) de lumière émis ; dans lequel la lumière réfléchie forme un segment (12) d'anneau lumineux sur le cercle (6i) d'extrémité de pale virtuel durant la rotation des extrémités (6b, 6c, 6g, 6h) de pales de rotor associées autour de la tête (1d) de rotor ;
dans lequel la lumière réfléchie a une longueur d'onde qui est détectable sans dispositif (11) de vision nocturne dans le mode sans vision nocturne, et dans lequel la lumière réfléchie a une longueur d'onde qui est détectable par un dispositif (11) de vision nocturne dans le mode vision nocturne.

2. Giravion (1) selon la revendication 1,
dans lequel la longueur d'onde qui est détectable par le dispositif (11) de vision nocturne est comprise dans un spectre de longueur d'onde allant de 450 nm à 930 nm, de préférence entre 650 nm et 850 nm.

3. Giravion (1) selon la revendication 1 ou 2,
dans lequel ladite au moins une source (7a, 7b) de lumière est l'une parmi une lumière venant d'une lampe LED, halogène, laser ou Xenon.

4. Giravion (1) selon l'une quelconque des revendications précédentes,
dans lequel ladite au moins une unité (9b, 9h) réfléchissant la lumière comprend un autocollant réfléchissant la lumière, fixé sur ladite au moins une parmi les extrémités (6b, 6c, 6g, 6h) de pales de rotor associées, et/ou un revêtement (13a, 13b, 13c) réfléchissant la lumière appliqué sur ladite au moins une parmi les extrémités (6b, 6c, 6g, 6h) de pales de rotor associées.

5. Giravion (1) selon la revendication 4,
dans lequel le revêtement (13a, 13b, 13c) réfléchissant comprend au moins une couche (13a) de fond, une couche (13b) phosphorescente, et un revêtement (13c) transparent brillant.

6. Giravion (1) selon la revendication 5,
dans lequel le revêtement (13c) transparent brillant présente une brillance supérieure à 90 Gu.

7. Giravion (1) selon la revendication 5 ou 6,
dans lequel la couche (13b) phosphorescente est apte à réfléchir la lumière en réponse à une illumination par le faisceau de lumière blanche émis, et dans lequel le revêtement (13c) transparent brillant est apte à réfléchir la lumière en réponse à une illumination par le faisceau de lumière infrarouge émis.

8. Giravion (1) selon l'une quelconque des revendications précédentes,
comprenant en outre un fuselage (2) qui forme une paroi (2c) côté tribord et une paroi (2d) côté bâbord, et dans lequel ladite au moins une source (7a, 7b) de lumière comprend une première source (7a) de lumière prévue sur la paroi (2d) côté bâbord et une seconde source (7b) de lumière prévue sur la paroi (2c) côté tribord.
